# EUROPÄISCHE PATENTANMELDUNG

(11) **EP 4 166 388 A1**
(43) Veröffentlichungstag der Anmeldung: **19.04.2023**
(21) Anmeldenummer: 22190130.9
(22) Anmeldetag: 12.08.2022
(51) Int. Cl.: B60P 1/44

(54) **TRANSPORTFAHRZEUG**

(30) Priorität: 14.10.2021 DE 102021126711
(71) Anmelder: nobilia-Werke J. Stickling GmbH & Co. KG, 33415 Verl (DE)
(72) Erfinder: SCHLICKEL, Maik, 33102 Paderborn (DE)
(74) Vertreter: Dantz, Jan Henning

(57) **Zusammenfassung**

Ein Transportfahrzeug (1) umfasst einen Laderaum (2) zum Transportieren von Gegenständen (12) auf einem Transportboden (3) und eine Hubvorrichtung (10) an einer Öffnung des Laderaums (2), wobei die Hubvorrichtung (10) eine Plattform (11) zum Abstellen von Gegenständen (12) aufweist, die zwischen einer angehobenen Position, in der die Plattform (11) im Wesentlichen auf Höhe des Transportbodens (3) angeordnet ist, und einer abgesenkten Position auf einem Untergrund bewegbar ist, wobei die Plattform (11) an einem Schlitten (20) gehalten ist und zwischen einer Transportposition unter dem Transportboden (3) in eine hervorstehende Gebrauchsstellung neben dem Transportboden (3) verfahrbar ist. Dadurch kann die Plattform (11) der Hubvorrichtung (10) kompakt ausgebildet sein und einen Be- und Entladevorgang effektiv unterstützen.

## Beschreibung

Die vorliegende Erfindung betrifft ein Transportfahrzeug mit einem Laderaum zum Transportieren von Gegenständen auf einem Transportboden und einer Hubvorrichtung an einer Öffnung des Laderaums, wobei die Hubvorrichtung eine Plattform zum Abstellen von Gegenständen aufweist, die zwischen einer angehobenen Position, in der die Plattform im Wesentlichen auf Höhe des Transportbodens angeordnet ist, und einer abgesenkten Position auf einem Untergrund bewegbar ist.

In der DE 10 2008 048 337 A1 ist eine Hubladebühne für einen Lastkraftwagen gezeigt, wobei die Ladeplattform eine Öffnung eines Laderaums verschließen kann und von der Schließposition verschwenkbar ist, um bei einem Be- oder Entladevorgang Gegenstände anzuheben oder abzusenken. Solche Hubladebühnen sind aufwändig in der Herstellung, besitzen ein hohes Eigengewicht und sind sehr langsam.

Die DE 38 33 066 C1 offenbart eine Hubladebühne für Fahrzeuge, die verschwenkbar an einem Fahrzeug gehalten ist und für eine Transportlage unter dem Fahrzeug positionierbar ist. Bei dieser Hubladebühne besteht der Nachteil, dass sie nur in der angehobenen Position horizontal ausgerichtet ist, aber beim Absenken sich neigt, so dass Gegenstände, wie hohe Möbelstücke, umfallen können, was zu Transportschäden führt. Zudem sind die Hebelverhältnisse ungünstig, so dass die Hubladebühne und der mechanische Antrieb ein hohes Eigengewicht besitzen. Darüber hinaus sind die Auf- und Abbauzeiten, sowie die Verfahrzeiten dieser Hubladebühnen sehr langsam.

Es ist daher Aufgabe der vorliegenden Erfindung, ein Transportfahrzeug zu schaffen, bei dem eine bewegbare Plattform zum Be- und Entladen effektiv genutzt werden kann und ein einfaches und schnelles Verstauen in der Transportposition möglich ist.

Diese Aufgabe wird mit einem Transportfahrzeug mit den Merkmalen des Anspruches 1 gelöst.

Das erfindungsgemäße Transportfahrzeug umfasst eine Hubvorrichtung mit einer Plattform, die zwischen einer angehobenen Position und einer abgesenkten Position bewegbar ist, wobei die Plattform an einem Schlitten gehalten ist und zwischen einer Transportposition unter einem Transportboden eines Laderaums und einer hervorstehenden Gebrauchsstellung neben dem Transportboden verfahrbar ist. Der Bediener kann somit für einen Be- oder Entladevorgang den Schlitten der Hubvorrichtung unter dem Transportboden hervorziehen und dann den Transportboden nutzen, um Gegenstände in den Laderaum oder aus dem Laderaum zu befördern. Dadurch kann die Hubvorrichtung kompakt aufgebaut sein und lässt sich zudem einfach bedienen.

Vorzugsweise sind der Schlitten und die Plattform in der Transportposition in einem Gehäuse unter dem Transportboden angeordnet. Dadurch können der Schlitten und die Plattform geschützt vor Spritzwasser angeordnet sein, so dass die bewegbaren Teile besser vor Verschleiß geschützt sind. Das Gehäuse kann dabei einen Innenraum mit dem Schlitten und der Plattform umgeben und an einem Gestell des Transportfahrzeuges fixiert sein.

Für einen kompakten Aufbau ist die Plattform mit geringerer Breite als der Transportboden ausgebildet. Die Breite ist dabei die horizontale Erstreckung senkrecht zur Fahrtrichtung des Fahrzeuges. Die Breite der Plattform kann beispielsweise zwischen 20 % bis 80 % der Breite des Transportbodens betragen, insbesondere zwischen 30 % und 70 %. Vorzugsweise ist die Plattform mittig an dem Transportfahrzeug angeordnet.

Die Plattform ist vorzugsweise an zwei Lenkern gehalten und über die gesamte Schwenkbewegung der Lenker im Wesentlichen horizontal ausgerichtet. Die Lenker bewegen dabei eine Parallelogrammführung und besitzen bevorzugt die gleiche Länge, so dass eine exakt horizontale Ausrichtung der Plattform über den gesamten Schwenkweg gewährleistet wird.

Für eine einfache Handhabung ist der Schlitten vorzugsweise in der Gebrauchsstellung und/oder der Transportstellung verriegelbar. Hierfür kann ein entsprechender Riegelmechanismus vorgesehen sein, bei dem über einen Riegel eine Sperrung des Schlittens in der Gebrauchsstellung und/oder der Transportstellung erreicht wird. Die verriegelte Position kann dabei über die Schwerkraft oder eine Federkraft gesichert sein.

Zum Bewegen der Plattform von einer abgesenkten Position in eine angehobene Position ist vorzugsweise ein Antrieb vorgesehen, insbesondere ein Hydraulikantrieb. Optional kann auch ein mechanischer Antrieb oder ein Antrieb über einen Kraftspeicher erfolgen. Vorzugsweise ist der Antrieb jedoch als Hydraulikantrieb ausgebildet, der bei einer Absenkbewegung der Plattform genutzt wird, um die Bewegung der Plattform abzubremsen. Der Hydraulikkreislauf kann somit einerseits zum Anheben genutzt werden und andererseits als Bremsvorrichtung bei der Absenkbewegung.

Für einen besonders kompakten Aufbau weist die Plattform mindestens zwei relativ zueinander verschwenkbare Plattformteile auf. Die Plattformteile können dabei für eine Transportposition aufeinandergelegt werden, um nur wenig Stauraum zu benötigen. Für die Gebrauchsstellung werden die Plattformteile auseinandergeklappt und bilden vorzugsweise eine gemeinsame Ebene aus, auf der Gegenstände abgestellt werden können. Die Plattform kann dabei an einer Oberseite eben ausgebildet sein, wobei optional eine oder mehrere Profilierungen vorgesehen sein können, beispielsweise um bei einer Sackkarre eine Endposition anzugeben, bis zu der die Sackkarre beim Be- oder Entladen verfahren werden darf. Statt einer Profilierung können auch Vorsprünge, Rillen, Rippen oder andere Bauteile an der Plattform montiert sein.

In einer weiteren Ausgestaltung ist an der Plattform mindestens ein Halteelement fixiert, das nach oben hervorstehend angeordnet ist. Das Halteelement dient als Absturzsicherung für Personen auf der Plattform, die sich an dem Halteelement festhalten können. Hierfür steht das Halteelement vorzugsweise um mindestens 80 cm, vorzugsweise um mehr als 1 m, nach oben hervor, wobei im oberen Bereich ein Bügel ausgebildet sein kann, der bei Bedarf schnell gegriffen werden kann.

Die Hubvorrichtung ist vorzugsweise an zwei Längsstreben des Transportfahrzeuges über Klemmelemente lösbar fixiert. Dadurch kann die Hubvorrichtung auch auf einfache Weise bei bestehenden Transportfahrzeugen nachgerüstet werden. Die Klemmelemente können über mindestens eine Schraube an einer Längsstrebe fixiert sein, so dass sich die Hubvorrichtung auch vormontieren lässt und dann als Einheit an einem Fahrzeug montiert werden kann. Das Transportfahrzeug ist dabei bevorzugt als Lastkraftwagen ausgebildet, kann aber auch als Anhänger für einen Lastkraftwagen ausgebildet sein.

Die Erfindung wird nachfolgend anhand eines Ausführungsbeispiels mit Bezug auf die beigefügten Zeichnungen näher erläutert. Es zeigen:
- Figur 1: eine perspektivische Ansicht eines hinteren Bereiches eines Transportfahrzeuges mit einer Hubvorrichtung in der Transportstellung;
- Figuren 2A und 2B: zwei Ansichten des Transportfahrzeuges der Figur 1 mit der Hubvorrichtung in Gebrauchsstellung;
- Figur 3: eine perspektivische Ansicht der Hubvorrichtung ohne Transportfahrzeug in einer Transportposition;
- Figur 4: eine Ansicht der Hubvorrichtung der Figur 3 in einer hervorstehenden Position;
- Figur 5: eine Ansicht der Hubvorrichtung der Figur 3 in einer angehobenen Position, und
- Figur 6: eine perspektivische Ansicht der Hubvorrichtung der Figur 3 in einer abgesenkten Position.

Ein Transportfahrzeug 1 ist als Lastkraftwagen oder Transportanhänger ausgebildet und umfasst einen Laderaum 2, der einen Transportboden 3 aufweist und von zwei parallel zur Fahrtrichtung angeordneten Seitenwänden 4 umgeben ist. An der Vorderseite und der Oberseite ist der Laderaum 2 ebenfalls verschlossen und weist eine rückseitige Öffnung zwischen den Seitenwänden 4 auf, die sich vorzugsweise über die gesamte Breite des Transportbodens 3 erstreckt. Der Transportboden 3 ist auf einem Gestell 5 des Transportfahrzeuges 1 angeordnet, das über Räder 6 verfahrbar ist. An dem Gestell 5 ist rückseitig ein Unterfahrschutz in Form eines Balkens 7 angeordnet, der senkrecht zur Fahrtrichtung ausgerichtet ist und an dem eine Abdeckplatte 8 fixiert ist.

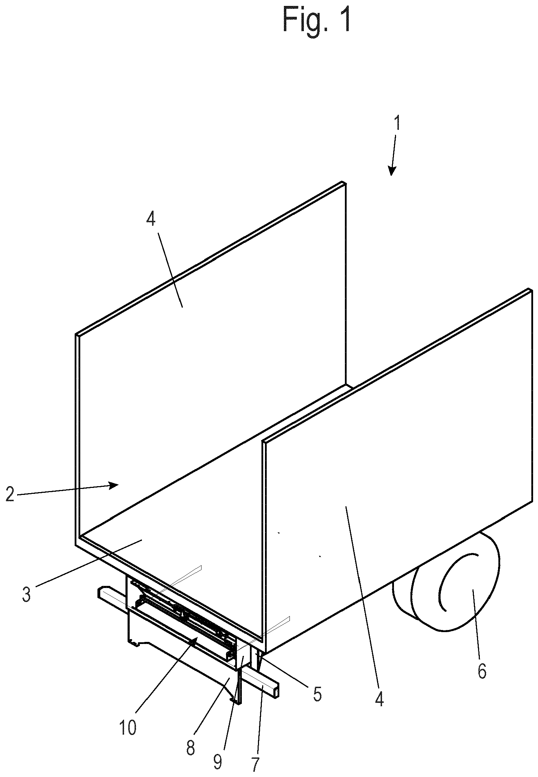

An der Öffnung des Laderaums ist ferner eine Hubvorrichtung 10 vorgesehen, die sich in der Transportposition nach Figur 1 vollständig unter dem Transportboden 3 befindet und deren rückwärtiger Abschnitt zwischen dem Balken 7 und der Unterseite des Transportbodens 3 angeordnet ist.

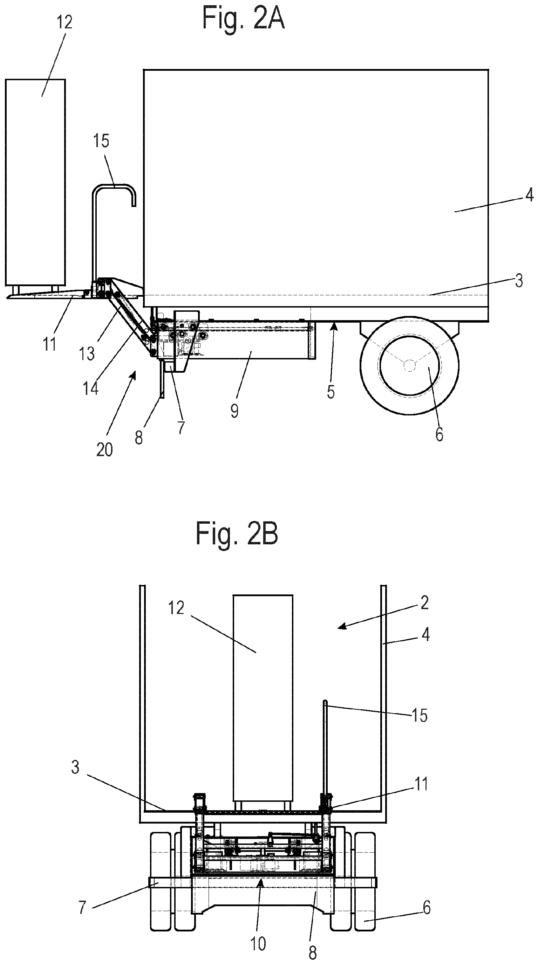

In den Figuren 2A und 2B ist die Hubvorrichtung 10 in einer Gebrauchsstellung gezeigt, in der eine Plattform 11 der Hubvorrichtung 10 mit einer Oberseite im Wesentlichen flächenbündig mit einer Oberseite des Transportbodens 3 angeordnet ist. Die Plattform 11 ist dabei an zwei Lenkern 13 und 14 gehalten, die auf eine Seite drehbar an einem Schlitten 20 und an der gegenüberliegenden Seite drehbar an einer Anbindung an der Plattform 11 gelagert sind. Die Lenker 13 und 14 besitzen dabei dieselbe Länge, so dass beim Verschwenken der Lenker 13 und 14 von der angehobenen Position in die abgesenkte Position gewährleistet ist, dass die Plattform 11 horizontal ausgerichtet bleibt.

Auf der Plattform 11 ist ein Gegenstand 12 angeordnet, beispielsweise ein Möbel, das über die Plattform 11 von der angehobenen Position auf Höhe des Transportbodens 3 in eine abgesenkte Position verfahren wird, insbesondere einem Untergrund, auf dem das Transportfahrzeug 1 angeordnet ist.

An der Plattform 11 steht ein Halteelement 15 nach oben hervor und dient als Absturzsicherung, da das Halteelement 15 durch einen Benutzer einfach gegriffen werden kann. Hierfür ist in Greifhöhe, also in einer Höhe von mindestens 80 cm oberhalb der Plattform 11, ein bügelförmiges Griffelement an dem Halteelement 15 vorgesehen.

Die Hubvorrichtung 10 umfasst ein Gehäuse 9, das einen geschlossenen Innenraum umgibt, in dem die Hubvorrichtung 10 in der Transportposition angeordnet werden kann. Das Gehäuse 9 ist nach außen im Wesentlichen abgedichtet.

In Figur 2B ist erkennbar, dass die Hubvorrichtung 10 mit der Plattform 11 eine geringere Breite besitzt als der Transportboden 3. Die Plattform 11 kann eine Breite besitzen, die beispielsweise zwischen 30 % bis 70 % der Breite des Transportbodens 3 aufweist, so dass sich die Hubvorrichtung 10 in kompakter Bauweise unterhalb des Transportbodens 3 verstauen lässt.

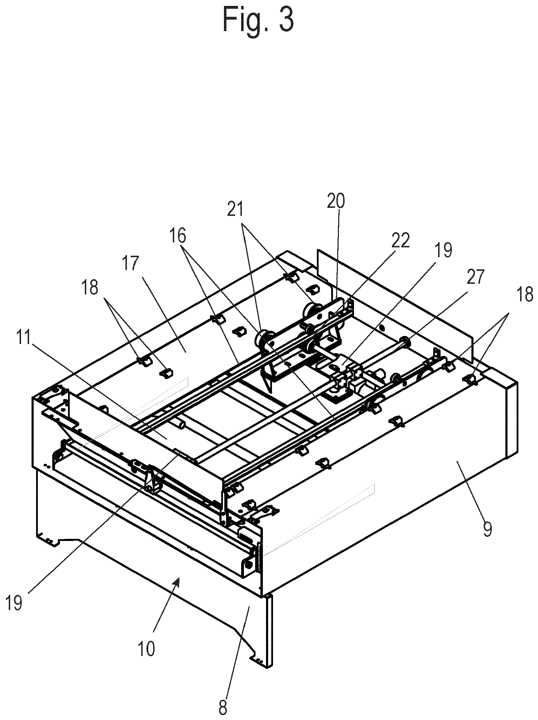

In den Figuren 3 bis 6 wird die Hubvorrichtung 10 in unterschiedlichen Positionen gezeigt, wobei der Transportboden 3 und das Transportfahrzeug 1 nicht dargestellt sind.

In Figur 3 ist die Hubvorrichtung 10 in einer Transportposition gezeigt, in der die Plattform 11 und ein Schlitten 20 in dem Innenraum des Gehäuses 9 angeordnet sind. Der Schlitten 20 ist entlang von Schienen 16 verfahrbar, wobei der Schlitten 20 zwei beabstandete Schlittenteile aufweist, an denen jeweils Rollen 21 und 22 drehbar gelagert sind. Die Rollen 21 sind dabei entlang einer Oberseite der Schiene 16 und die Rollen 22 einer Unterseite der Schienen 16 entlang von Laufbahnen verfahrbar. Jede Schiene 16 ist dabei integral mit einem Profil 17 ausgebildet, kann aber auch als separates Bauteil an dem Profil 17 fixiert sein.

Jedes Profil 17 ist über Klemmelemente 18 an Längsstreben des Transportfahrzeuges 1 lösbar fixiert. Die Klemmelemente 18 sind dabei als Klammern oder Krallen ausgebildet, die jeweils über eine Schraube klemmend an einer Längsstrebe festlegbar sind. Es können auch andere Befestigungsmittel zur Fixierung der Hubvorrichtung 10 an dem Gestell 5 eingesetzt werden.

Zwischen den beiden Schienen 16 ist eine Stange 27 angeordnet, die sich in Fahrrichtung des Schlittens 20 erstreckt und an der ein Verriegelungsmechanismus fixiert ist. Ein erstes Riegelelement 19 ist an der Stange 27 so fixiert, dass der Schlitten 20 in der Transportposition verriegelbar ist. Dadurch wird eine Bewegung des Schlittens 20 entlang der Schienen 16 verhindert. Ein zweites Riegelelement 19 ist versetzt an der Stange 27 fixiert und kann den Schlitten 20 in einer Gebrauchsstellung verriegeln.

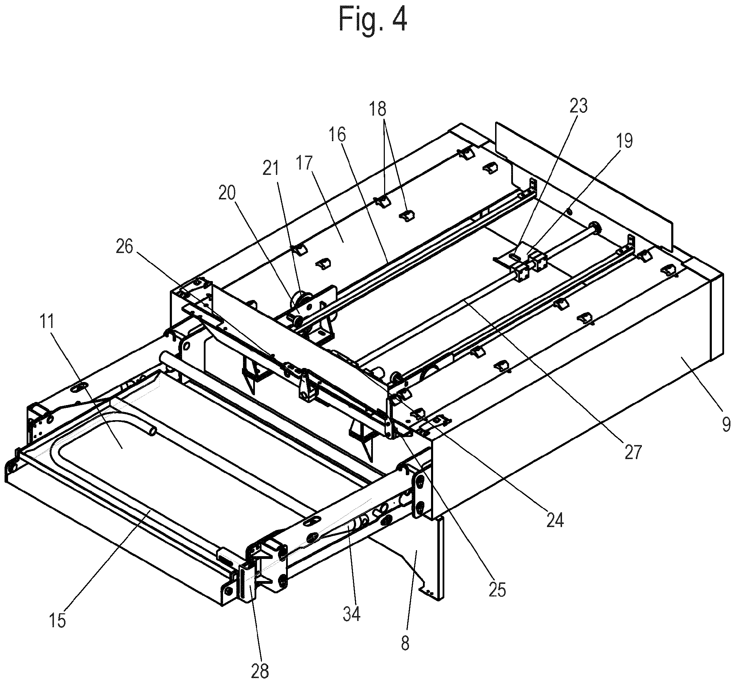

Wenn die Hubvorrichtung 10 in eine Gebrauchsstellung gebracht werden soll, wird der Schlitten 20 entriegelt und in eine hervorstehende Position verfahren, die in Figur 4 gezeigt ist. Das Verfahren des Schlittens 20 kann automatisch über einen Antrieb oder manuell von Hand erfolgen. Zum Entriegeln des Schlittens 20 ist ein Betätigungshebel 25 vorgesehen, der über ein Gestänge auf einen Hebel 26 wirkt, mittels dem die Stange 27 drehbar ist. Dadurch können die Riegelelemente 19 verschwenkt werden und einen Eingriff mit einem Riegel an dem Schlitten 20 lösen. An jedem Riegelelement 19 ist dabei eine Öffnung 23 oder Aufnahme vorgesehen, in die ein Riegel an dem Schlitten 20 eingefügt werden kann. Die Riegelelemente 19 besitzen dabei eine Anlaufschräge, so dass beim Verfahren des Schlittens 20 der Riegel das Riegelelement 19 an der Stange 27 verschwenken kann und bei Erreichen der Öffnung 23 dort einrastet, da die Riegelelemente 19 durch die Schwerkraft wieder nach unten verschwenkt werden. Auch andere Mechaniken können eingesetzt werden, um den Schlitten 20 in der Gebrauchsstellung und/oder der Transportposition zu verriegeln.

Die Plattform befindet sich in Figur 4 in der herausgezogenen Position noch in einem zusammengeklappten Zustand, und auch das Halteelement 15 ist auf der Plattform 11 angeordnet. Das Halteelement 15 ist an einem Lager 28 verschwenkbar angeordnet, das an der Plattform 11 fixiert ist. In einem ersten Schritt kann das Halteelement 15 nach oben in die hervorstehende Position verschwenkt und an dem Lager 28 fixiert werden. Anschließend kann die Plattform 11 von der zusammengeklappten Position in eine ausgeklappte Stellung verschwenkt werden.

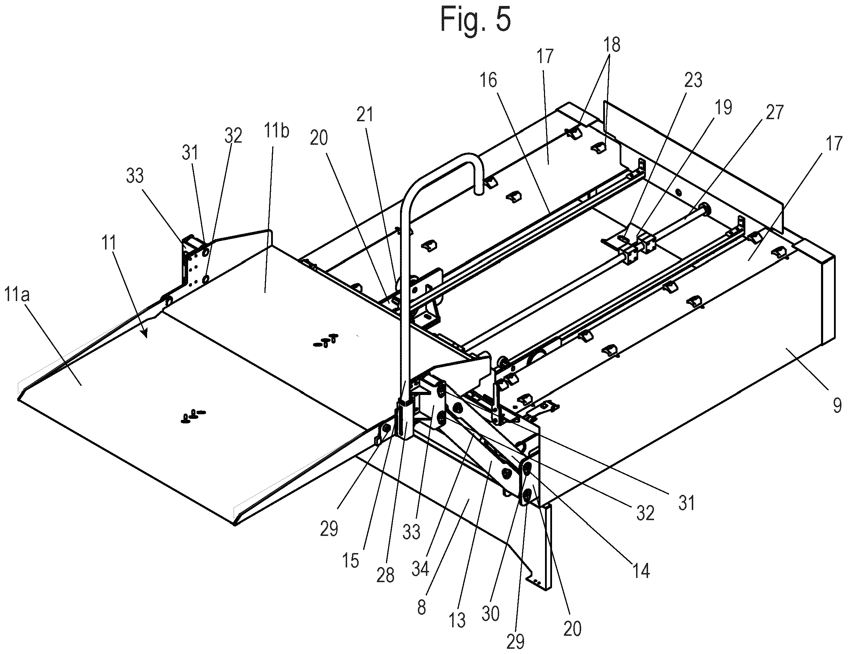

In Figur 5 ist die Plattform 11 in einer ausgeklappten Position gezeigt, und es ist erkennbar, dass die Plattform 11 zwei Plattformteile 11a und 11b aufweist, die entlang einer Achse 29 verschwenkbar zueinander gelagert sind. Dadurch können die Plattformteile 11a und 11b für die Transportposition aufeinandergelegt werden und für eine Gebrauchsstellung auseinandergeklappt werden, damit eine relativ große Oberfläche der Plattform 11 zum Be- und Entladen zur Verfügung steht.

An der Plattform 11 ist ferner die Anbindung 33 fixiert, an der die beiden Achsen 31 und 32 zur gelenkigen Anbringung der Lenker 13 und 14 angeordnet sind. Die Lenker 13 und 14 sind an den Achsen 29 und 30 an dem Schlitten 20 drehbar gelagert. Dabei sind an beiden Seiten der Plattform 11 jeweils zwei Lenker 13 und 14 angeordnet, und die Mechanik ist somit zu einer mittleren vertikalen Ebene symmetrisch ausgebildet.

Zwischen den Lenkern 13 und 14 befindet sich ein Hydraulikzylinder 34, der zum Anheben der Plattform 11 über einen Hydraulikantrieb betätigt wird. Durch den Hydraulikzylinder 34 kann die Plattform 11 von einer abgesenkten Position in eine angehobene Position gemäß Figur 5 verschwenkt werden. Der Hydraulikantrieb kann die Plattform 11 dann in der angehobenen Position halten, damit diese beladen werden kann.

Zum Absenken der Plattform 11 kann dann wahlweise der Hydraulikantrieb betätigt werden, um ihn in eine gegenläufige Richtung anzutreiben, oder der Hydraulikantrieb wird entsperrt und ermöglicht somit ein Absenken der Plattform 11, wobei die Bewegung der Plattform 11 durch das in dem Hydraulikantrieb strömende Hydraulikfluid abgebremst wird, um ein hartes Anschlagen der Plattform 11 auf einem Untergrund zu vermeiden und zu verlangsamen. Insofern kann der Hydraulikantrieb optional nur zum Anheben der Plattform 11 eingesetzt werden, während das Absenken der Plattform 11 ohne Antrieb erfolgen kann.

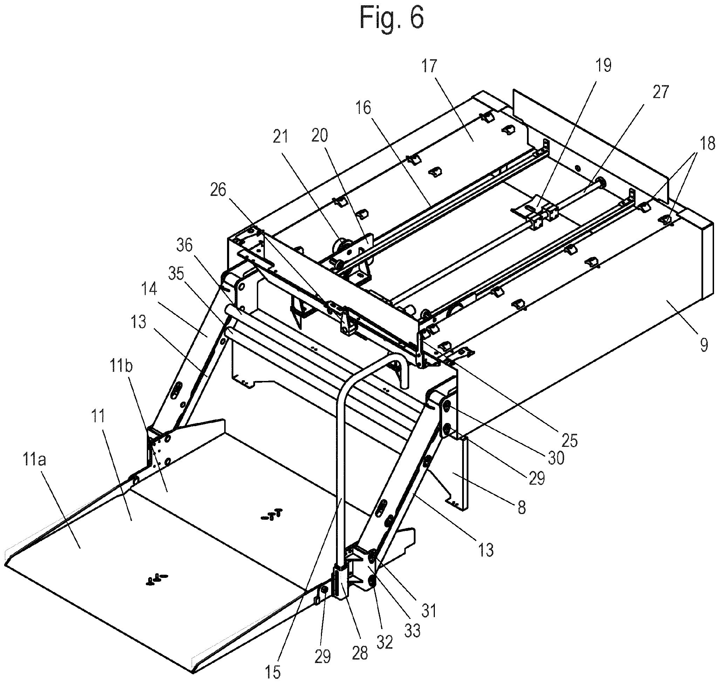

In Figur 6 ist die Hubvorrichtung 10 mit der Plattform 11 in der abgesenkten Position gezeigt, in der die Plattform 11 auf einem Untergrund angeordnet ist und entladen werden kann. Es ist erkennbar, dass die beiden unteren Lenker 13 über eine Verbindungsstange 35 und die beiden oberen Lenker 14 über eine Verbindungsstange 36 miteinander verbunden sind, so dass die Bewegung der Lenker 13 und 14 auf beiden Seiten der Plattform 11 synchronisiert ist.

Soll die Plattform 11 von der abgesenkten Position wieder in die Transportposition gebracht werden, wird die Plattform 11 zunächst angehoben, so dass die Lenker 13 und 14 sich im Wesentlichen in einer horizontalen Ebene befinden. Anschließend wird das Plattformteil 11a um die Achse 29 um etwa 180° verschwenkt und auf das Plattformteil 11b geklappt. Anschließend kann das nach oben hervorstehende Halteelement 15 entriegelt werden, um auf das Plattformteil 11a an der Oberseite aufgelegt zu werden, so dass die in Figur 4 gezeigte Position erreicht wird. Der Benutzer kann nun den Betätigungshebel 25 verschwenken, so dass über das Gestänge und den Hebel 26 die Stange 27 gedreht wird, was eine Entriegelung an dem hinteren Riegelelement 19 bewirkt. Dadurch kann der Schlitten 20 nun entlang der Schienen 16 verfahren werden, bis der Riegel an dem Schlitten 20 an dem vorderen Riegelelement 19 verriegelt wird, so dass die in Figur 3 dargestellte Position erreicht wird.

### Bezugszeichenliste

- 1: Transportfahrzeug
- 2: Laderaum
- 3: Transportboden
- 4: Seitenwand
- 5: Gestell
- 6: Rad
- 7: Balken
- 8: Abdeckplatte
- 9: Gehäuse
- 10: Hubvorrichtung
- 11: Plattform
- 11a, 11b: Plattformteil
- 12: Gegenstand
- 13: Lenker
- 14: Lenker
- 15: Halteelement
- 16: Schiene
- 17: Profil
- 18: Klemmelement
- 19: Riegelelement
- 20: Schlitten
- 21: Rolle
- 22: Rolle
- 23: Öffnung
- 25: Betätigungshebel
- 26: Hebel
- 27: Stange
- 28: Lager
- 29: Achse
- 30: Achse
- 31: Achse
- 32: Achse
- 33: Anbindung
- 34: Hydraulikzylinder
- 35: Verbindungsstange
- 36: Verbindungsstange

## Patentansprüche

1. Transportfahrzeug (1) mit einem Laderaum (2) zum Transportieren von Gegenständen (12) auf einem Transportboden (3) und einer Hubvorrichtung (10) an einer Öffnung des Laderaums (2), wobei die Hubvorrichtung (10) eine Plattform (11) zum Abstellen von Gegenständen (12) aufweist, die zwischen einer angehobenen Position, in der die Plattform (11) im Wesentlichen auf Höhe des Transportbodens (3) angeordnet ist, und einer abgesenkten Position auf einem Untergrund bewegbar ist, **dadurch gekennzeichnet, dass** die Plattform (11) an einem Schlitten (20) gehalten ist und zwischen einer Transportposition unter dem Transportboden (3) in eine hervorstehende Gebrauchsstellung neben dem Transportboden (3) verfahrbar ist.

2. Transportfahrzeug nach Anspruch 1, **dadurch gekennzeichnet, dass** der Schlitten (20) und die Plattform (11) in der Transportposition in einem Gehäuse (9) unter dem Transportboden (3) angeordnet sind.

3. Transportfahrzeug nach Anspruch 1 oder 2, **dadurch gekennzeichnet, dass** die Plattform (11) eine geringere Breite als der Transportboden (3) aufweist.

4. Transportfahrzeug nach einem der vorhergehenden Ansprüche, **dadurch gekennzeichnet, dass** die Plattform (11) an zwei Lenkern (13, 14) gehalten ist und über den gesamten Schwenkweg der Lenker (13, 14) im Wesentlichen horizontal ausgerichtet bleibt.

5. Transportfahrzeug nach einem der vorhergehenden Ansprüche, **dadurch gekennzeichnet, dass** der Schlitten (20) in der Gebrauchsstellung verriegelbar ist.

6. Transportfahrzeug nach einem der vorhergehenden Ansprüche, **dadurch gekennzeichnet, dass** der Schlitten (20) in der Transportstellung verriegelbar ist.

7. Transportfahrzeug nach einem der vorhergehenden Ansprüche, **dadurch gekennzeichnet, dass** ein Antrieb vorgesehen ist, mittels dem die Plattform (11) von der abgesenkten Position in die angehobene Position bewegbar ist.

8. Transportfahrzeug nach Anspruch 7, **dadurch gekennzeichnet, dass** der Antrieb als Hydraulikantrieb ausgebildet ist, über den eine Absenkbewegung der Plattform (11) von der angehobenen Position in die abgesenkte Position abbremsbar ist.

9. Transportfahrzeug nach einem der vorhergehenden Ansprüche, **dadurch gekennzeichnet, dass** die Plattform (11) mindestens zwei relativ zueinander verschwenkbare Plattformteile (11a, 11b) aufweist.

10. Transportfahrzeug nach einem der vorhergehenden Ansprüche, **dadurch gekennzeichnet, dass** an der Plattform (11) ein Halteelement (15) fixiert ist, das nach oben hervorstehend angeordnet ist.

11. Transportfahrzeug nach einem der vorhergehenden Ansprüche, **dadurch gekennzeichnet, dass** die Hubvorrichtung (10) an zwei Längsstreben des Transportfahrzeuges über Klemmelemente (18) lösbar fixiert ist.

12. Transportfahrzeug nach einem der vorhergehenden Ansprüche, **dadurch gekennzeichnet, dass** das Transportfahrzeug als Lastkraftwagen ausgebildet ist.

13. Transportfahrzeug nach einem der vorhergehenden Ansprüche, **dadurch gekennzeichnet, dass** die Plattform (11) an einer Oberseite im Wesentlichen eben ausgebildet ist, wobei mindestens eine Profilierung vorgesehen ist, die als Positionierhilfe dient und bis zu der eine Sackkarre beim Beoder Entladen verfahrbar ist.
